# EUROPÄISCHE PATENTSCHRIFT

(11) **EP 1 504 201 B1**
(45) Veröffentlichungstag und Bekanntmachung des Hinweises auf die Patenterteilung: **20.12.2006**
(21) Anmeldenummer: 03710163.1
(22) Anmeldetag: 11.04.2003
(51) Int. Cl.: F16C 39/06, H02K 7/09

(54) **PASSIVES, DYNAMISCH STABILISIERENDES MAGNETLAGER UND ANTRIEB**
PASSIVE, DYNAMICALLY STABILIZING MAGNETIC BEARING AND DRIVE UNIT
PALIER MAGNETIQUE PASSIF A STABILISATION DYNAMIQUE ET ENTRAINEMENT

(30) Priorität: 16.05.2002 CH 826022002
(43) Veröffentlichungstag der Anmeldung: 09.02.2005
(73) Patentinhaber: Silphenix GmbH, 4436 Oberdorf (CH)
(72) Erfinder: Asper, Hans Konrad, 8706 Meilen (CH)
(74) Vertreter: Blum, Rudolf Emil
(86) Internationale Anmeldenummer: PCT/IB2003/001451
(87) Internationale Veröffentlichungsnummer: WO 2003/098064

(56) Entgegenhaltungen:
- US-A- 5 302 874
- US-A- 5 508 573
- US-A- 5 847 480
- US-A- 6 111 332
- PATENT ABSTRACTS OF JAPAN vol. 005, no. 123 (M-082), 8. August 1981 (1981-08-08) -& JP 56 063117 A (MITSUBISHI ELECTRIC CORP), 29. Mai 1981 (1981-05-29)

## Beschreibung

### Hinweis auf verwandte Anmeldungen

Diese Anmeldung beansprucht die Priorität der Schweizer Patentanmeldung 826/02, die am 16. Mai 2002 eingereicht wurde und deren ganze Offenbarung hiermit durch Bezug aufgenommen wird.

### Hintergrund

Passive Magnetlager sind vorgesehen um insbesondere sehr schnell rotierende Rotoren ohne Verschleiss und ohne wesentliche Energieverluste zu lagern. Sie können insbesondere bei Schwungrädern für Energiespeicher eingesetzt werden. Die Schwungräder werden dabei sowohl radial, als auch achsial berührungsfrei gelagert.

### Stand der Technik

Konventionelle mechanische Lager, wie z.B. Kugellager, sind bei hohen Geschwindigkeiten sehr laut, müssen geschmiert werden, haben einen grossen Verschleiss und sind für Vakuum oder niedrige Temperaturen nicht geeignet. Aktive Magnetlager haben einen fortwährenden Energiebedarf und sind wegen der notwendigen Positionssensoren, Stromquellen und Steuerelektronik sehr teuer. Passive Magnetlager mit Supraleitern sind ebenfalls teuer und aufwendig in der Herstellung. Supraleiter müssen zudem im Betrieb gekühlt werden. Ausserdem sind sie sehr brüchig und dürfen deshalb keinen Vibrationen ausgesetzt werden. Die bisher bekannten passiven Magnetlager ohne Supraleiter, wie z.B. die in US 5,302,874 beschriebenen Lager, sind in der Herstellung ebenfalls sehr aufwendig. Ihre Tragfähigkeit und Steifigkeit ist unvollkommen. Zudem erfordern die Anordnungen eine hohe Präzision bei der Herstellung, weil es sonst im Betrieb zu Vibrationen und Energieverlusten kommt. Bei der Anordnung aus US 5,302,874, bei welcher es im Gleichgewichtszustand keinen Fluss durch die Spulen geben sollte, stellt sich zusätzlich das Problem, dass sich der Rotor durch die Zentrifugalkräfte ausdehnt und die Null-Fluss-Bedingung nicht mehr erfüllt ist, was zu weiteren Energieverlusten führt. Die bekannten Lager sind deshalb für den industriellen Einsatz nur bedingt geeignet.

US 5 847 480 zeigt ein achsiales Lager mit Spulen, welche zwischen zwei Reihen von Magneten angeordnet sind. Eine derartige Anordnung ist aufgrund der grossen benötigten Zahl von Magneten allerdings teuer und aufwändig.

### Darstellung der Erfindung

Es stellt sich daher die Aufgabe, ein passives Magnetlager der eingangs genannten Art bereitzustellen, das die oben genannten Nachteile zumindest teilweise vermeidet.

Diese Aufgabe wird von Anspruch 1 gelöst, indem das passive Magnetlager Magnete und Lagerspulen umfasst, wobei die Magnete relativ zu den Lagerspulen entlang mindestens eines Pfades bewegbar sind und die Lagerspulen aufgrund der von den Magneten erzeugten Magnetfelder einem oszillierenden magnetischen Fluss ausgesetzt sind und in einem oder mehreren Stromkreisen zusammengeschaltet sind, wobei für jeden Stromkreis gilt, dass sich bei einer Bewegung der Magnete entlang des Pfades die vom oszillierenden magnetischen Fluss in den Lagerspulen induzierten Spannungen zu jedem Zeitpunkt im Wesentlichen aufheben und dadurch kein Strom fliesst und bei einer Abweichung der Magnete vom Pfad in Richtung der Polarisierungsachse der Magnete sich die in den Lagerspulen induzierten Spannungen aufgrund der veränderten Entfernungen von den Magneten und der damit veränderten Stärke des magnetischen Flusses nicht aufheben, so dass ein Strom fliesst und die vom Strom durchflossenen Lagerspulen auf die Magnete eine Rückstellkraft ausüben.

Solange der Rotor des Lagers in der Gleichgewichtsposition rotiert, gibt es zwar einen magnetischen Fluss durch die einzelnen Lagerspulen, es fliesst jedoch im Wesentlichen kein Strom durch die Lagerspulen. Beim Abweichen von der Gleichgewichtsposition fliesst hingegen Strom durch die Lagerspulen. Diese Charakteristik wird unter anderem dadurch erreicht, dass die Lagerspulen in einem oder mehreren Stromkreisen zusammengeschaltet sind.

Indem die Lagerspulen auf einer ersten Seite des Pfads und einer der ersten gegenüberliegenden Seite des Pfads angeordnet sind, und indem in jedem Stromkreis mindestens eine Lagerspule auf der ersten und der zweiten Seite zwischengeschaltet sind, ergibt sich eine Anordnung, die mit einer Reihe von Magneten mit beidseits angeordneten Spulen auskommt, was die Zahl der benötigten Magnete reduziert.

Die erfindungsgemässe Lager hat den Vorteil, einfach herstellbar und damit kostengünstig zu sein.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine Prinzipskizze des erfindungsgemässen passiven Magnetlagers,
Fig. 2 die Ströme und Spannungen der in Fig. 1 gezeigten Anordnung,
Fig. 3 die Anordnung aus Fig.1, jedoch bei einer Abweichung der Magnete vom vorgesehenen Pfad,
Fig. 4 die Ströme und Spannungen der in Fig. 3 gezeigten Anordnung,
Fig. 5 eine Ausführung des erfindungsgemässen Lagers als Achsiallager mit zwei statischen Spulenträgern und einem rotierenden Magnetträger,
Fig. 6 eine Ausführung des erfindungsgemässen Lagers als Achsiallager mit zwei rotierenden Spulenträgern und einem statischen Magnetträger,
Fig. 7 das Schaltschema einer Ausführung des erfindungsgemässen Magnetlagers mit zwei Spulenträgern und acht in Serie geschalteten Spulen,
Fig. 8 das Schaltschema einer Ausführung des erfindungsgemässen Magnetlagers mit zwei Spulenträgern und acht paarweise geschalteten Spulen,
Fig. 9 eine Ausführung des erfindungsgemässen Lagers als Achsiallager mit drei statischen Spulenträgern und zwei rotierenden Magnetträgern,
Fig. 10 ein bevorzugtes Schaltschema für die in Fig. 9 gezeigte Ausführung des erfindungsgemässen Magnetlagers,
Fig. 11 einen Abschnitt eines Spulenträgers einer Ausführung des erfindungsgemässen Magnetlagers,
Fig. 12 den Abschnitt eines Spulenträgers aus Fig. 9, jedoch mit zwei daran vorbei bewegten Magneten,
Fig. 13 den Rotor eines erfindungsgemässen Magnetlagers,
Fig. 14 ein Schnitt durch das erfindungsgemässe Magnetlager entlang der Linie XIV-XIV aus Fig. 13,
Fig. 15 eine Ausführung des erfindungsgemässen Magnetlagers,
Fig. 16 eine Prinzipskizze des erfindungsgemässen Magnetlagers mit Antrieb,
Fig. 17 den Stromverlauf der in Fig. 16 gezeigten Anordnung mit positiven Stromimpulsen,
Fig. 18 den Stromverlauf der in Fig. 16 gezeigten Anordnung mit alternierenden Stromimpulsen,
Fig. 19 eine schematische Darstellung der Anordnung von Lagerspulen und Antriebsspulen beim erfindungsgemässen Magnetlager mit Antrieb,
Fig. 20 eine Ausführung des erfindungsgemässen Magnetlagers mit einem optischen Sensor.

### Weg(e) zur Ausführung der Erfindung

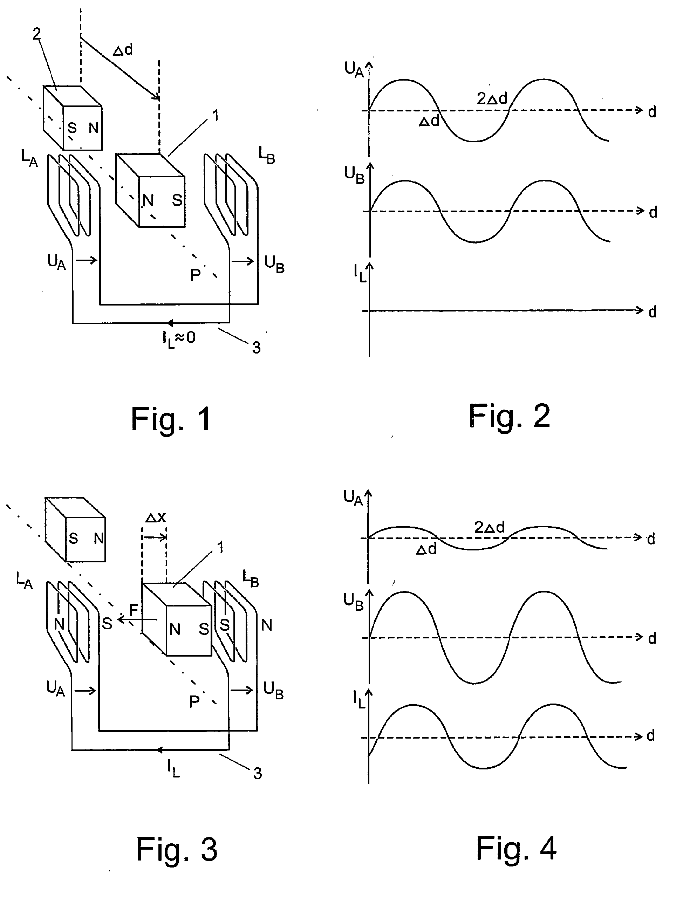

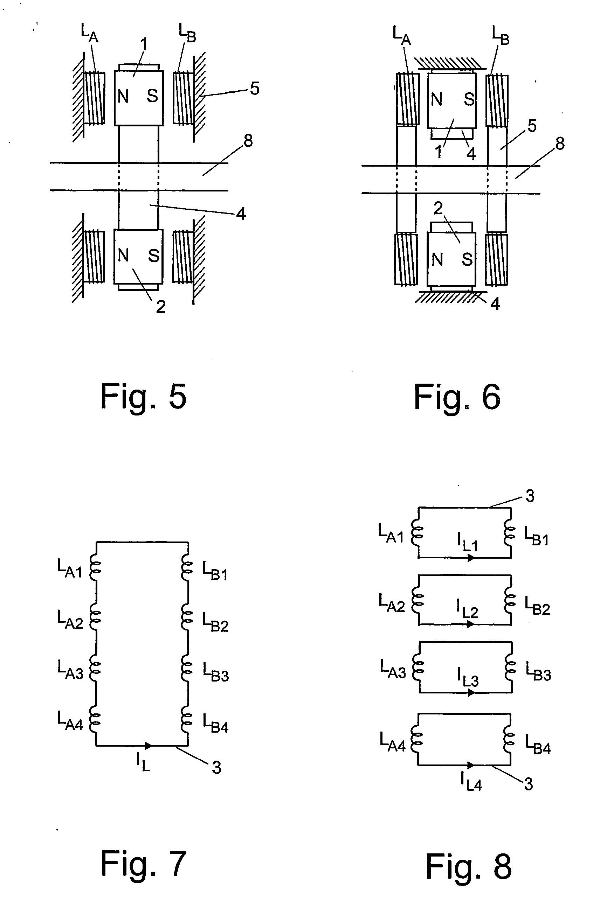

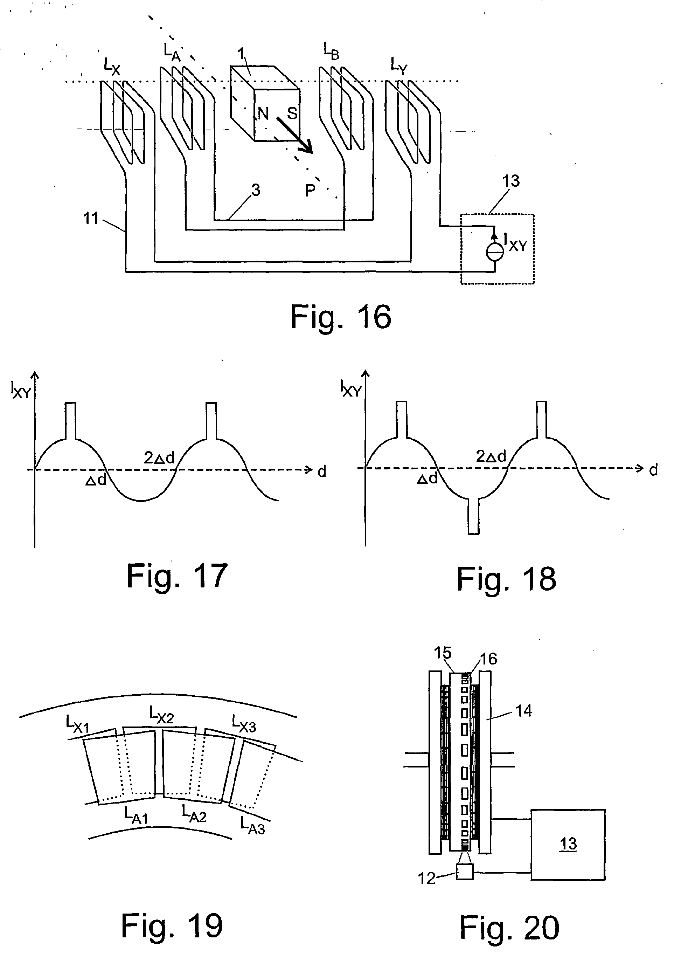

Das Prinzip der Erfindung ist anhand von Fig. 1 bis 4 erklärt. Verschiedene auf dem Prinzip basierende Achsiallager sind anhand von Fig. 5 bis 15 beschrieben. Das erfindungsgemässe passive Magnetlager kann durch einen Antrieb erweitert werden, was anhand von Fig. 16 bis 20 erläutert wird.

Die bei den verschiedenen Ausführungen vorkommenden Spulen lassen sich nach ihrer Funktion z.B. in Lagerspulen und Antriebsspulen unterteilen. Dort, wo eine solche Spezifizierung nicht erforderlich ist, insbesondere bei den Ausführungen ohne Antrieb, wird der Einfachheit halber der Begriff "Spule" ohne einen Zusatz wie "Lager-" oder "Antriebs-" verwendet.

Der in diesem Dokument verwendete Begriff Polarisierungsachse ist wie folgt zu verstehen: Bei Permanentmagneten ist die Polarisierungsachse die Gerade durch Süd- und Nordpol. Bei Spulen ist die Polarisierungsachse ebenfalls die Gerade durch den Süd- und Nordpol, unabhängig davon, dass sich diese erst bei einem Stromfluss ergeben. Die Polarisierungsachse ist bezüglich einer Vertauschung von Süd- und Nordpol invariant.

Fig. 1 zeigt eine Prinzipskizze des erfindungsgemässen passiven Magnetlagers. Es sind zwei Spulen L_{A}, L_{B} und zwei Permanentmagnete 1, 2 gezeigt. Spulenträger und Magnetträger sind nicht gezeigt. Die Permanentmagnete 1, 2 bewegen sich relativ zu den Spulen L_{A}, L_{B} auf einem Pfad P. Mit dieser Art der Beschreibung soll nicht der Fall ausgeschlossen werden, dass die Permanentmagnete 1, 2 statisch sind und sich dafür die Spulen L_{A}, L_{B} bewegen. Der Pfad P ist relativ zu den Spulen L_{A}, L_{B} definiert und kann damit wie in obigem Fall auch ein bewegtes Bezugssystem haben. Die Mittelpunkte der Permanentmagnete 1, 2 haben einen Abstand Δd voneinander. Entlang desselben Pfades P ist Δd bevorzugt konstant, d.h. die Permanentmagnete 1, 2 sind gleichabständig verteilt. Zu einem bestimmten Zeitpunkt können jedem Permanentmagneten 1, 2 auf dem Pfad P zwei Spulen L_{A}, L_{B} zugeordnet werden. Die Polarisierungsachsen dieser zwei Spulen L_{A}, L_{B} liegen auf derselben Geraden. Die Permanentmagnete 1, 2 haben jeweils einen Nordpol N und einen Südpol S. Ihre Polarisierungsachse ist gerade, d.h. nicht gebogen, wie dass zum Beispiel bei Hufeisenmagneten der Fall ist. Die aufeinanderfolgenden Permanentmagnete 1, 2 sind jeweils im wesentlichen parallel, jedoch vom Vorzeichen her entgegengesetzt zueinander polarisiert. Die Polarisierungsachse von Magnet 1 ist senkrecht zur Ebene des Pfades P und parallel zur Polarisierungsachse der Spulen L_{A}, L_{B}. Das Magnetfeld seitlich der bewegten Permanentmagnete 1, 2 oszilliert damit in Abhängigkeit der Geschwindigkeit der Permanentmagnete 1, 2. Durch die Bewegung der Permanentmagnete 1, 2 ändert sich der Fluss durch die seitlich des Pfades P angeordneten Spulen L_{A} und L_{B}. Es entsteht dadurch eine Spannung U_{A} bzw. U_{B} über jeder der Spulen L_{A} und L_{B}. Der Pfad P, auf welchem sich die Permanentmagnete 1, 2 im Gleichgewichtszustand des Lagers bewegen, liegt genau in der Mitte zwischen den Spulen L_{A}, L_{B}. Dadurch ist der Fluss durch beide Spulen L_{A}, L_{B} gleich gross. Die Spulen L_{A}, L_{B} sind in einem Stromkreis 3 in Serie hintereinandergeschaltet, und zwar so, dass sie bei einem Stromfluss eine einander entgegengerichtete magnetische Polarisierung aufweisen.

Fig. 2 zeigt den Strom- und Spannungsverlauf der Anordnung aus Fig. 1. Die Werte sind in Abhängigkeit des von den Permanentmagneten 1, 2 zurückgelegten Weges d aufgezeichnet. Die Geschwindigkeit der Permanentmagnete 1, 2 ist beim dargestellten Verlauf konstant. Die Spannungen U_{A}, U_{B} über den beiden Spulen L_{A}, L_{B} oszillieren. Der Strom I_{L} durch die in Serie geschalteten Spulen L_{A}, L_{B} ist im Wesentlichen konstant Null, weil sich die Spannungen U_{A}, U_{B} über den Spulen L_{A}, L_{B} wegen der Symmetrie der Anordnung gegenseitig aufheben.

Fig. 3 zeigt die Anordnung aus Fig.1, jedoch bei einer Abweichung der Permanentmagnete 1, 2 vom vorgesehenen Pfad P. Die Abweichung ist in Richtung der Polarisierungsachse der Permanentmagnete 1, 2. Der Abstand zwischen der Mitte der Permanentmagnete 1, 2 und dem vorgesehenen Pfad P ist Δx. Die Magneten sind damit nicht mehr in der Mittellage und die Anordnung ist nicht mehr symmetrisch, d.h. die Spule L_{A} ist näher am Permanentmagnet 1 als die Spule L_{B}. Aufgrund der Inhomogenität des Magnetfeldes ist nun der magnetische Fluss durch die Spule L_{A} grösser als der durch die Spule L_{B}. Die Spannungen U_{A}, U_{B} über den Spulen heben sich nicht mehr auf. Im Stromkreis 3 und damit auch in den Spulen L_{A}, L_{B} fliesst ein Strom I_{L}. Die Spulen L_{A}, L_{B} wirken als Elektromagnete. Es wirkt damit eine Rückstellkraft F auf den Permanentmagnet 1. Die Spule L_{A} wirkt anziehend und die Spule L_{B} abstossend auf den Permanentmagneten 1. Die Rückstellkraft F wirkt der Abweichung der Permanentmagnete 1, 2 vom vorgesehenen Pfad P entgegen.

Fig. 4 zeigt den Strom- und Spannungsverlauf der Anordnung aus Fig. 3. Die Unterschiede sind überhöht dargestellt um die Funktionsweise zu verdeutlichen. Im Gegensatz zu Fig. 2 sind nun die induzierten Spannungen U_{A}, U_{B} wegen der unterschiedlichen Entfernung zwischen Spulen L_{A}, L_{B} und Permanentmagnet 1, 2 nicht mehr gleich. Dadurch fliesst ein Strom I_{L}. Dieser wiederum erzeugt in den Spulen L_{A}, L_{B} ein Magnetfeld, welches dazu führt, dass auf den Permanentmagneten 1 die Rückstellkraft F wirkt. Diese wirkt so lange, bis sich die Permanentmagnete 1, 2 wieder in der Mittellage, d.h. auf dem vorgesehenen Pfad P, bewegen und sich die induzierten Spannungen U_{A}, U_{B} aufheben. I_{L} ist im Wesentlichen ein Wechselstrom. Die Rückstellkraft F ist daher pulsierend. U_{A}, U_{B} sind im Wesentlichen Wechselspannungen. Der Strom I_{L} ist bezüglich der Spannungen U_{A}, U_{B} phasenverschoben. Die Phasenverschiebung ist abhängig von der Drehzahl des Lagers und den Induktivitäten des Stromkreises. Beim gezeigten Stromverlauf beträgt die Phasenverschiebung ca. 30°. Für die Stabilität des Lagers ist eine Phasenverschiebung von 90° optimal. Das erfindungsgemässe Lager wird daher bevorzugt so ausgestaltet, dass die Phasenverschiebung bei der vorgesehenen maximalen Drehzahl im Wesentlichen 90° ist. Dies kann, wie auch anhand von Fig. 7 beschrieben, unter anderem dadurch erreicht werden, dass im Stromkreis 3 eine zusätzliche Induktivität zwischengeschaltet wird. Die Anordnung ist asymptotisch stabil, d.h. die Magneten kehren nach einer Auslenkung automatisch in die Gleichgewichtsposition zurück.

Fig. 5 zeigt schematisch eine Ausführung des erfindungsgemässen Lagers als Achsiallager.

Das gezeigte Achsiallager umfasst zwei statische Spulenträger 5 und einen rotierenden Magnetträger 4. Auf dem Magnetträger 4 sind Permanentmagnete 2 angeordnet. Die Permanentmagnete 2 sind bezüglich ihrer Mittelpunkte alle in derselben Ebene angeordnet. Solche Ebenen, in welchen mehrere Magnete angeordnet sind werden im vorliegenden Dokument auch mit dem Begriff "Magnetebene" bezeichnet. Analog werden Ebenen in denen mehrere Spulen angeordnet sind "Spulenebene" genannt. Der Magnetträger 4 ist auf einer Welle 8 befestigt. Spulen L_{A}, L_{B} sind in zwei Ebenen auf Spulenträgern 5 ringförmig angeordnet. Bei der schematischen Darstellung von Fig. 5 sind von jedem dieser Ringe jeweils zwei Spulen gezeigt. Die Spulen L_{A}, L_{B} bestehen aus einem isolierten Leiter, welcher mehrfach um einen Träger gewickelt ist. Die gezeigte Anordnung hat gegenüber US 5,302,874 den Vorteil, dass die Symmetrie und damit das Prinzip der Anordnung auch gewährleistet ist, wenn sich der Rotor 1, 2, 4 wegen der Zentrifugalkräfte ausdehnt. Die Spulen L sind dann zwar einem etwas geringerem Magnetfeld ausgesetzt, aber die induzierten Spannungen U_{A}, U_{B} heben sich weiterhin im Gleichgewichtszustand im Wesentlichen auf. Bei US 5,302,874 führt die Ausdehnung des Rotors zu einer Störung der Null-Fluss Bedingung und damit zu Energieverlusten.

Fig. 6 zeigt schematisch eine Ausführung des erfindungsgemässen Lagers als Achsiallager mit zwei rotierenden Spulenträgern 5 und einem statischen Magnetträger 4. Der Magnetträger 4 ist als Ring ausgestaltet und ist deshalb beim gezeigten Schema an zwei Orten zu sehen. Bei diesem Beispiel sind die Spulen L_{A} und L_{B} und damit das Bezugssystem des Pfades P bewegt. Die Permanentmagnete 1, 2 sind statisch, bewegen sich jedoch relativ zum Pfad P und dessen Bezugssystem.

Fig. 7 zeigt das Schaltschema einer Ausführung des erfindungsgemässen Magnetlagers mit zwei Spulenträgern A, B und in Serie geschalteten Spulen L_{A1} bis L_{A4} und L_{B1} bis L_{B4}. Im vorliegenden Dokument wird auch der Begriff "zwischenschalten" verwendet, womit gemeint ist, dass der Stromkreis an einer Stelle aufgeschnitten wird und anschliessend durch das Einfügen des jeweiligen Zweipols wieder geschlossen wird. Die Spulen L des erfindungsgemässen Lagers sind reale Spulen. Ihr Widerstand R ist in diesem Schema, wie auch in den folgenden Schemata, nicht gezeigt. Der Buchstabe im Index gibt dabei an, in welcher Spulenebene die Spule angeordnet ist. Die Zahl im Index gibt an, um die wievielte Spule L einer Spulenebene entlang des Pfades P gezählt es sich handelt. Die Spulen L seitlich des Pfades P werden dabei bevorzugt so ausgestaltet, dass sie direkt aufeinander folgen und somit den gesamten Pfad P abdecken. Es ist jedoch auch möglich zwischen den Spulen Abstände vorzusehen oder kleinere Spulen zu verwenden. Alle Spulen sind an einem einzigen Stromkreis 3 mit Strom I_{L} angeschlossen. Der gezeigte Stromkreis 3 ist direkt, d.h. ohne weitere Komponenten, geschlossen. Es ist jedoch auch das Zwischenschalten eines variablen Widerstandes möglich, mittels dessen die Steifigkeit des Lagers eingestellt werden kann, oder einer Induktivität, mittels derer das Lager für gewisse Drehfrequenzen optimiert werden kann. Dabei ist die Induktivität bevorzugt so zu dimensionieren, dass bei der vorgesehenen maximalen Drehfrequenz des Lagers die Phasenverschiebung zwischen Spulenspannungen und Spulenstrom I_{L} im Wesentlichen 90° ist. Bei dieser Phasenverschiebung hat das Lager die grösste Stabilität. Da es sich um ein passives Magnetlager handelt, sind keine aktiven Elemente wie Strom- oder Spannungsquellen vorgesehen. Alle Spulen L haben bevorzugt dieselbe Anzahl Wicklungen, dieselbe Induktivität und denselben Widerstand. Dies hat den Vorteil, dass die Mittelposition des Rotors bei einer symmetrischen Anordnung der Spulen zugleich die Gleichgewichtsposition ist. Der Widerstand sollte klein sein. Es ist jedoch kein Supraleiter erforderlich, wodurch die Vorrichtung sehr kostengünstig wird. Ein typischer Wert für den durchschnittlichen Betrag der Spannung (U_{A1}) über einer Spule (L_{A1}) beim Betrieb des Lagers ist ca. 1.5V. Bei einer Anordnung mit zwanzig Spulen pro Spulenträger (5) summieren sich die Spannungen über den Spulen (L) eines Spulenträgers (5) auf einen durchschnittlichen Betrag von insgesamt ca. 30V.

Fig. 8 zeigt das Schaltschema einer Ausführung des erfindungsgemässen Magnetlagers mit acht paarweise geschalteten Spulen L_{A1} bis L_{A4} und L_{B1} bis L_{B4}. Es gibt vier voneinander unabhängige Stromkreise 3 mit Strömen I_{L1} bis I_{L4}. Die Stromkreise 3 sind geschlossen. Die gezeigte Schaltung hat gegenüber der Schaltung aus Fig. 7 den Vorteil, dass ein derart geschaltetes Lager nicht nur einer achsialen Verschiebung sondern auch einer Kippbewegung des Rotors entgegengewirkt.

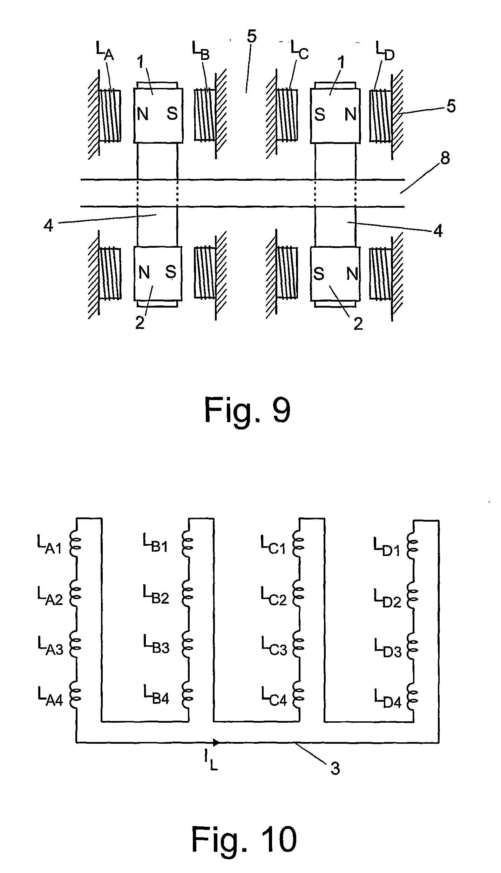

Fig. 9 zeigt schematisch eine Ausführung des erfindungsgemässen Lagers als Achsiallager mit drei statischen Spulenträgern 5 und zwei rotierenden Magnetträgern 4. Der erste Spulenträger 5 trägt die Spulen L_{A}, der zweite die Spulen L_{B} und L_{C} und der dritte die Spulen L_{D}. In dieser Ausführung gibt es zwei kreisförmige Pfade P, auf denen sich Permanentmagnete 1 bewegen. Die Kreise haben denselben Durchmesser und sind koaxial, d.h. eine Gerade durch die Mittelpunkte der Kreise ist senkrecht zu jeder der Kreisebenen. Alternativ kann die Erfindung auch mit konzentrischen Kreisen mit unterschiedlichem Durchmesser ausgeführt werden, d.h. mit einem äusseren und einem inneren Magnet- bzw. Spulenring in derselben Ebene. Die Stabilität und Steifigkeit des Lagers wird durch zusätzliche Pfade P bzw. zusätzliche Magnetträger 4 gegenüber der Anordnung mit nur einem Pfad P bzw. mit nur einem Magnetträger 4 verbessert.

Fig. 10 zeigt ein bevorzugtes Schaltschema für die in Fig. 9 gezeigte Ausführung des erfindungsgemässen Magnetlagers. Die sechzehn Spulen L_{A1} bis L_{A4}, L_{B1} bis L_{B4}, L_{C1} bis L_{C4} und L_{D1} bis L_{D4} sind in Serie geschaltet. Es gibt nur einen Stromkreis 3 mit Strom I_{L}. Der Stromkreis 3 ist geschlossen.

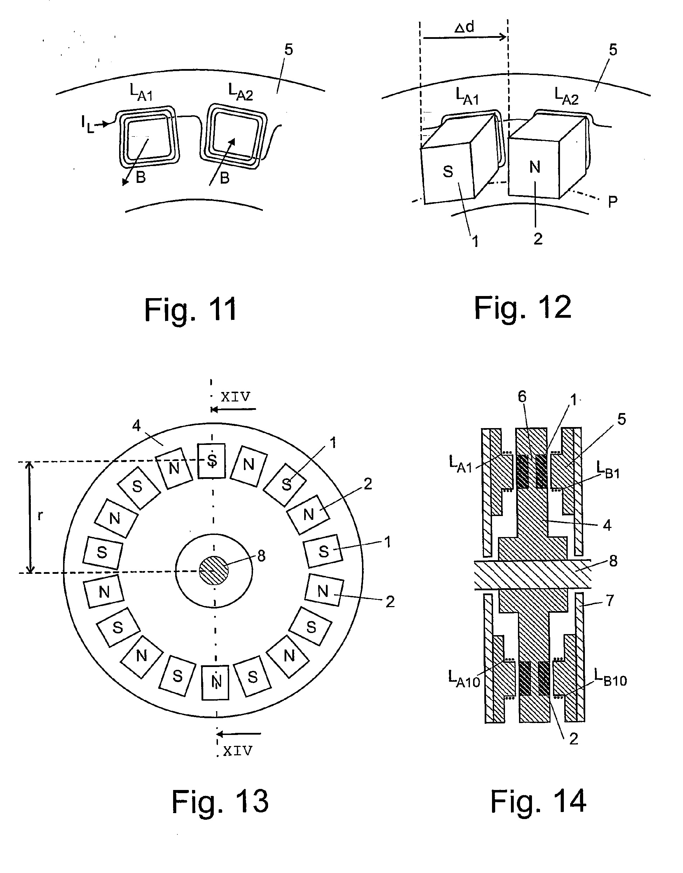

Fig. 11 zeigt einen Abschnitt eines Spulenträgers 5 einer Ausführung des erfindungsgemässen Magnetlagers mit einer Zusammenschaltung der Spulen L_{A} desselben Spulenträgers, wie z.B. im Schaltschema aus Fig.7 oder Fig. 10 dargestellt. Aufeinanderfolgende Spulen, z.B. L_{A1} und L_{A2}, sind so zusammengeschaltet, dass sie bei einem Strom I_{L} parallele, jedoch vom Vorzeichen her entgegengerichtete Magnetfelder B erzeugen. Auf dem Spulenträger 5 sind insgesamt achtzehn Spulen vorgesehen (nur zwei sind gezeigt). Die Spulen (L) sind auf einem Kreis gleichabständig verteilt. Damit ergibt sich für den Abstand zwischen den Mittelpunkten zweier Spulen jeweils ein Kreisbogen von 20°.

Fig. 12 zeigt den Spulenträger aus Fig. 11, jedoch mit den daran auf dem Pfad P vorbeibewegten Permanentmagneten 1, 2. Die Mittelpunkte der Permanentmagnete 1, 2 haben einen Abstand Δd voneinander. Die Mittelpunkte der Spulen L_{A1}, L_{A2} haben ebenfalls den Abstand Δd voneinander. Beim gezeigten Zustand ist der Fluss durch die Spulen L_{A}, L_{B} maximal. Werden die Permanentmagnete um ihren halben Abstand, d.h. um die Länge Δd/2, vorwärtsbewegt, so ist der Fluss durch die Spulen L_{A1}, L_{A2} Null. Nach einer Bewegung um die Länge Δd ist der Fluss wieder maximal, jedoch hat er ein anderes Vorzeichen.

Fig. 13 zeigt den Magnetträger 4 einer Ausführung des erfindungsgemässen Magnetlagers in einer Seitenansicht. Der Magnetträger weist achtzehn Permanentmagnete 1, 2 auf. Alle Permanentmagnete 1, 2 haben den gleichen Abstand von der Welle 8 des Rotors 1, 2, 4, 8. Der Abstand zwischen Magnetmittelpunkt und Rotationsachse ist jeweils r. Die Permanentmagnete 1, 2 sind alternierend mit dem Südpol S oder dem Nordpol N zum Betrachter hin angeordnet. Die Anzahl der Permanentmagnete 1, 2 muss deshalb gerade sein. In der bevorzugten Ausführungsform entspricht die Anzahl der Permanentmagnete 1, 2 der Anzahl Paare von Spulen L. Dadurch werden die von den Permanentmagneten 1, 2 erzeugten Felder optimal genutzt und es gibt wenig Streuverluste.

Fig. 14 zeigt einen Schnitt durch das Magnetlager aus Fig. 13 entlang der Linie XIV-XIV. Im Gegensatz zu Fig. 13 ist jedoch das ganze Lager gezeigt und nicht nur der Magnetträger 4. Der Magnetträger 4 ist als Rotor ausgestaltet und ist mit einer Welle 8 verbunden. Die Spulenträger 5 sind als Stator ausgestaltet. Die Spulenträger 5 sind zudem mit einem Weicheisenring 7 verbunden, welche insbesondere induzierte Hystereseverluste, z.B. im Gehäuse, reduziert und das Feld im Inneren des Lagers verstärkt. Es wird so der Nutzfluss erhöht und der Streufluss begrenzt. Die Permanentmagnete 1, 2 sind zweigeteilt und durch eine nicht magnetische Wand 6 getrennt. Eine derartige Anordnung vereinfacht die Montage der Permanentmagnete 1, 2, weil diese so durch ihre gegenseitige Anziehungskraft auf dem Magnetträger 4 gehalten sind. Der Magnetträger 4 weist Vertiefungen in Form der Permanentmagnete auf. Die Magnete können dadurch seitlich nicht verrutschen. Weil sich die beiden Magnetteile anziehen und sich somit gegenseitig auf den Magnetträger 4 pressen, sind keine weiteren Befestigungsmittel erforderlich.

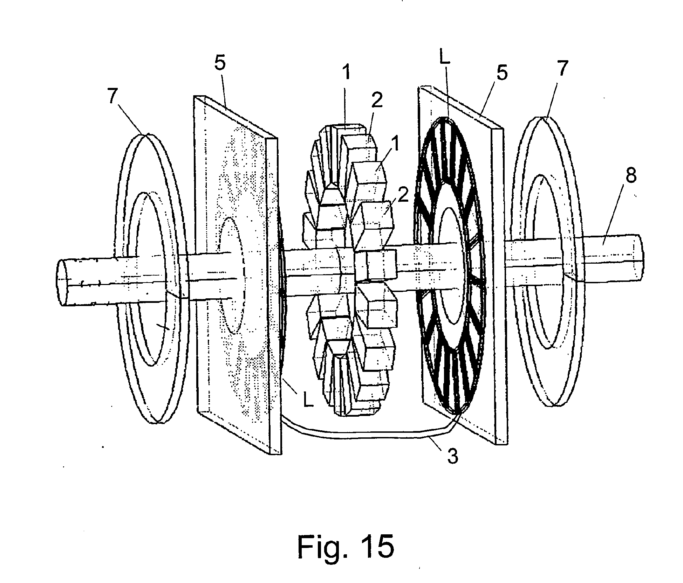

Fig. 15 zeigt eine Ausführung des erfindungsgemässen Magnetlagers. Die Anordnung ist zur besseren Einsicht achsial gestreckt. Achtzehn Permanentmagnete 1, 2 sind auf einem nicht gezeigten Magnetträger angeordnet. Bei einer Rotation des Rotors 1, 2, 8 bewegen sich die Permanentmagnete an achtzehn Paaren von Spulen L vorbei. Diese sind auf zwei statischen Spulenträgern 5 beidseits der Magnete 1, 2 angeordnet. Um Streuverluste der Spulen L zu reduzieren sind zwei Weicheisenringe 7 vorgesehen. Die Permanentmagnete sind quaderförmig. Es sind jedoch auch andere Formen möglich, z.B. die eines Prismas.

Fig. 16 zeigt eine Prinzipskizze des erfindungsgemässen Magnetlagers mit Antrieb. Es sind zwei Lagerspulen L_{A}, L_{B}, zwei Antriebsspulen L_{X}, L_{Y} und ein Magnet 1 gezeigt. Die Prinzipskizze entspricht im Wesentlichen der von Fig. 1, nur dass nun zusätzlich Antriebselemente vorgesehen sind. Das erfindungsgemässe Magnetlager mit Antrieb ist im Wesentlichen ein erfindungsgemässes passives Magnetlager, in welches ein Antrieb integriert wurde. Die Magnete 1 werden dabei sowohl für die Lagerung, als auch für den Antrieb verwendet. Die Magnete 1 bewegen sich auf einem Pfad P. Beidseits von Pfad P sind Lagerspulen L_{A}, L_{B} angeordnet, über welche auf die Magnete 1 bei einem Abweichen vom Sollpfad Rückstellkräfte ausgeübt werden. Ebenfalls beidseits von Pfad P sind Antriebsspulen L_{X}, L_{Y} angeordnet. Mittels dieser sind auf die Magnete 1 Antriebskräfte oder Bremskräfte ausübbar. Bevorzugt sind die Lagerspulen L_{A}, L_{B} direkt beim Pfad P und die Antriebsspulen L_{X}, L_{Y} vom Pfad P her gesehen unmittelbar hinter den Lagerspulen L_{A}, L_{B} angeordnet. Es ist jedoch auch möglich die Spulen anders anzuordnen, z.B. die Antriebsspulen L_{X}, L_{Y} vor den Lagerspulen L_{A}, L_{B} oder zweigeteilt vor und hinter den Lagerspulen L_{A}, L_{B}. Sowohl die Lagerspulen als auch die Antriebsspulen müssen im Bereich der Magnetfelder der Magnete 1, 2 angeordnet sein. Die Antriebsspulen L_{X}, L_{Y} sind, wie weiter unten anhand von Fig. 19 noch ausführlicher beschrieben wird, relativ zu den Lagerspulen L_{A}, L_{B} in Pfadrichtung um eine halbe Spulenbreite versetzt angeordnet. Sowohl die Lagerspulen L_{A}, L_{B} als auch die Antriebsspulen L_{X}, L_{Y} sind jeweils in einem Stromkreis 3 bzw. 11 in Serie hintereinandergeschaltet. Die Lagerspulen L_{A}, L_{B} sind so geschaltet, dass sie bei einem Stromfluss eine einander entgegengerichtete magnetische Polarisierung aufweisen. Antriebsspulen L_{X}, L_{Y} sind hingegen so geschaltet, dass sie bei einem Stromfluss eine gleich gerichtete magnetische Polarisierung aufweisen. Ohne an der Funktionsweise der Anordnung etwas zu ändern kann auch auf eine der beiden Antriebsspulen L_{X}, L_{Y} verzichtet werden. Bevorzugt sind jedoch die Antriebsspulen L_{X}, L_{Y} paarweise angeordnet, wobei die Polarisierungsachsen der beiden Spulen eines Paars auf derselben Gerade liegen. Im Stromkreis 11 der Antriebsspulen L_{X}, L_{Y} ist für die Energiezufuhr ein Strompulsgenerator 13 zwischengeschaltet. Basierend auf dem oben beschriebenen Prinzip kann das erfindungsgemässe Lager mit Antrieb als Achsiallager ausgestaltet werden.

Fig. 17 zeigt den Stromverlauf der in Fig. 16 gezeigten Anordnung. Mit einem Strompulsgenerator werden zur Speisung der Antriebsspulen bzw. zum Antrieb des Lagerrotors periodisch positive Stromimpulse erzeugt. Die Strompulse sind insbesondere einem Strom überlagert, welcher von der durch die Lagerrotation in den Antriebsspulen induzierten Spannung und der Nichtidealität der Stromquelle herrührt, und zwar jeweils nach der positiven Sinusflanke diese Stromes.

Fig. 18 zeigt den Stromverlauf der in Fig. 16 gezeigten Anordnung. Der Verlauf entspricht im Wesentlichen dem von Fig. 17, nur dass nicht nur positive, sondern alternierend positive und negative Strompulse erzeugt werden, was unter anderem eine grössere Antriebsleistung ermöglicht. Insbesondere können ausgehend vom gezeigten Signal auch Strompulse ausgelassen werden. Die Leistungszufuhr kann so gesteuert werden. Für ein Reduktion der Leistungszufuhr wird z.B. nur jeder zweite oder jeder zehnte Strompuls des in Fig. 18 gezeigten Signals erzeugt.

Fig. 19 ist eine schematische, teilweise Darstellung der Anordnung der Lagerspulen und Antriebsspulen bei einer bevorzugten Ausführung des erfindungsgemässen Magnetlagers mit Antrieb. In diesem Ausführungsbeispiel sind auf beiden Seiten der Magnete jeweils in einem Ring angeordnet sechzehn Lagerspulen und sechzehn Antriebsspulen vorgesehen. In einem weiteren Ausführungsbeispiel sind statt sechzehn jeweils vierundzwanzig Spulen vorgesehen. Der in der Figur gezeigte Abschnitt umfasst in etwa drei Lagerspulen L_{A1}, L_{A2}, L_{A3} und drei Antriebsspulen L_{X1}, L_{X2}, L_{X3}. Aufeinanderfolgende bzw. benachbarte Antriebsspulen L_{X1}, L_{X2} sind so geschaltet, dass sie bei einem Stromfluss eine im Wesentlichen parallele, jedoch bezüglich des Vorzeichens entgegengesetzte Polarisierung haben. Die Antriebsspulen L_{X1} bis L_{X16} und L_{Y1} bis L_{Y16} können, ähnlich wie anhand von Fig. 7 und 8 für die Lagerspulen gezeigt, in bevorzugt einem aber auch mehreren Stromkreisen zusammengeschlossen sein, wobei dann insbesondere für jeden Stromkreis eine separate Stromquelle vorgesehen wird. Die Antriebsspulen werden bevorzugt in Serie geschaltet, können aber auch parallel geschaltet werden. Im Prinzip kann auch jede Antriebsspule individuell an einer eigenen Stromquelle angeschlossen werden, wobei dann gegebenenfalls das Erfordernis einer bei benachbarten Spulen von Spule zu Spule alternierenden Polarisierung und einer für einander gegenüberliegende Spulen synchronen Polarisierung durch eine geeignete Steuerung der Stromquellen erfüllt werden muss. Die Antriebsspulen L_{X1}, L_{X2}, L_{X3} sind, relativ zu den Lagerspulen L_{A1}, L_{A2}, L_{A3} um eine halbe Spulenbreite versetzt angeordnet. Dies entspricht, was die Spulenströme, Spulenspannungen und Felder der Magnete betrifft, einer Phasenverschiebung von 90 Grad. Diese versetzte Anordnung hat den Vorteil, dass sich der von zwei benachbarten und damit unterschiedlich polarisierten Antriebsspulen L_{X1}, L_{X2} erzeugte Fluss durch eine Lagerspulen L_{A1} überlagert und im Wesentlichen aufhebt. Dadurch können Wechselwirkungen zwischen der Lagerfunktion und der Antriebsfunktion reduziert werden, was unter anderem die Simulation und damit die Optimierung und Steuerung des erfindungsgemässen Magnetlagers mit Antrieb vereinfacht.

Fig. 20 zeigt eine Ausführung des erfindungsgemässen Magnetlagers mit Antrieb als Achsiallager. Die Magnete sind auf einem Rotor 15 angeordnet. Die Polarisierungsachsen der Antriebsspulen sind achsial ausgerichtet. Die Antriebsspulen sind in zwei Antriebsspulenebenen beidseits des Rotors angeordnet. In einer vereinfachten Ausführung wird auf eine der beiden Antriebsspulenebenen verzichtet. Die Antriebsspulen sind, ähnlich wie die Lagerspulen, auf mit der Lagerachse koaxialen Kreisen gleichabständig verteilt. Wie oben bereits erwähnt werden die Antriebsspulen des Lagers mit Strompulsen gespeist. Diese Strompulse können in einem festen Takt und/oder in Abhängigkeit von der Position bzw. Bewegung des Lagerrotors 15 generiert werden. Die Position bzw. Bewegung des Lagerrotors 15 kann z.B. basierend auf den in den Antriebsspulen induzierten Spannungen oder mit einem Hallsensor ermittelt werden. In einer bevorzugten Ausführung der Erfindung wird die Position bzw. Bewegung des Lagerrotors 15 mit einem optischen Sensor 12 ermittelt. Dieser ist dazu ausgestaltet Markierungen 16 auf dem Rotor 15 des Lagers zu detektieren. Das Ausgangssignal des optischen Sensors 12 wird zur Steuerung des Strompulsgenerators 13 benutzt. Bevorzugt sind die Markierungen, z.B. als in einem geeigneten Abstand alternierende Hell-Dunkel-Abschnitte, derart gestaltet, dass das Ausgangssignal des optischen Sensors 12 bezüglich seines zeitlichen Verlaufes direkt, d.h. alleine durch eine geeignete Verstärkung bzw. Diskretisierung, zur Steuerung einer Stromquelle im Strompulsgenerator 13 benutzt werden kann.

Bei den in den Figuren beschriebenen Ausführungsformen der Erfindung werden als Magnete Permanentmagnete verwendet. Dies hat den Vorteil, dass das Lager keine fortwährende Energiezufuhr erfordert. Die Permanentmagnete könnten jedoch z.B. auch durch Elektromagnete ersetzt werden, welche u.a. eine Steuerung der Steifigkeit des Lagers zuliessen.

Das erfindungsgemässe Lager ist asymptotisch stabil. Es rotiert deshalb nicht nur in einer Gleichgewichtsposition, sondern es kehrt bei Auslenkungen auch von alleine wieder in dieselbe Gleichgewichtsposition zurück.

Das erfindungsgemässe Lager ist dynamisch stabil, d.h. die Stabilität ist erst ab einer bestimmten Drehzahl gewährleistet. Für die Übergangsphase zwischen dem Ruhezustand und der minimalen für die Stabilität erforderlichen Drehzahl sind temporäre mechanische Lagerungen vorgesehen. Das erfindungsgemässe Lager ist in der bevorzugten Ausführungsform für Geschwindigkeiten von über 25'000 Umdrehungen pro Minute optimiert.

Die anhand der Figuren beschriebenen Achsiallager sind radial instabil. Die Instabilität ist jedoch gering, so dass die Achsiallager in Kombination mit Radiallagern für vollständig berührungslose Lagerung von Schwungrädern in Energiespeichern verwendet werden können. Derartige Energiespeicher eignen sich z.B. für Elektrofahrzeuge. Die Lebensdauer derartiger vollständig berührungsfreier Schwungräder ist nahezu unbegrenzt.

Eine bevorzugte Ausführung eines solchen Energiespeichers mit berührungslos gelagertem Schwungrad weist ein erfindungsgemässes passives dynamisch stabilisierendes achsiales Magnetlager und mindestens ein, bevorzugt zwei passive radiale Magnetlager auf. Die passiven radialen Magnetlager basieren im Wesentlichen nur auf Permanentmagneten, d.h. nicht auf Spulen, und sind daher im Gegensatz zur achsialen Lagerung nicht nur dynamisch, sondern auch bei stillstehendem Rotor stabilisierend.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Passives Magnetlager, umfassend Magnete (1, 2) und Lagerspulen (L_{A}, L_{B}), wobei das Magnetlager ein achsiales Magnetlager ist, wobei die Magnete (1, 2) relativ zu den Lagerspulen (L_{A}, L_{B}) entlang mindestens eines kreisförmigen Pfades (P) bewegbar sind und sowohl die Magnete (1, 2) als auch die Lagerspulen (L_{A}, L_{B}) bezüglich ihrer Polarisierungsachsen achsial ausgerichtet sind, wobei die Lagerspulen (L_{A}, L_{B}) aufgrund der von den Magneten (1, 2) erzeugten Magnetfelder einem oszillierenden magnetischen Fluss ausgesetzt sind, **dadurch gekennzeichnet, dass** Lagerspulen (L_{A}, L_{B}) auf einer ersten Seite des Pfades (P) und einer der ersten gegenüberliegenden zweiten Seite des Pfades (P) angeordnet sind, dass die Lagerspulen (L_{A}, L_{B}) in einem oder mehreren Stromkreisen (3) derart zusammengeschaltet sind, dass in jedem Stromkreis (3) mindestens eine Lagerspule (L_{A}) der ersten Seite des Pfades (P) und mindestens eine Lagerspule (L_{B}) der zweiten Seite des Pfades (P) zwischengeschaltet sind, wobei für jeden Stromkreis (3) gilt, dass sich bei einer Bewegung der Magnete (1, 2) entlang des Pfades (P) die vom oszillierenden magnetischen Fluss in den Lagerspulen (L_{A}, L_{B}) induzierten Spannungen (U_{L}) zu jedem Zeitpunkt im Wesentlichen aufheben und dadurch kein Strom (I_{L}) fliesst und bei einer Abweichung (Δx) der Magnete (1, 2) vom Pfad (P) in Richtung der Polarisierungsachse der Magnete (1, 2) sich die in den Lagerspulen (L_{A}, L_{B}) induzierten Spannungen (U_{L}) aufgrund der veränderten Entfernungen von den Magneten (1, 2) und der damit veränderten Stärke des magnetischen Flusses nicht aufheben, so dass ein Strom (I_{L}) fliesst und die vom Strom (I_{L}) durchflossenen Lagerspulen (L_{A}, L_{B}) auf die Magnete (1, 2) eine Rückstellkraft (F) ausüben.

2. Passives Magnetlager nach Anspruch 1, **dadurch gekennzeichnet, dass** die Lagerspulen (L_{A}, L_{B}) und die Magnete (1, 2) den gleichen Abstand (r) von der Rotationsachse haben.

3. Passives Magnetlager nach einem der Ansprüche 1 oder 2, **dadurch gekennzeichnet, dass** die Magnete (1, 2) in einer Magnetebene oder symmetrisch zu einer Magnetebene angeordnet sind und eine Vielzahl Lagerspulen (L_{A}, L_{B}) beidseits der Magnetebene in zwei Lagerspulenebenen angeordnet sind, wobei die Lagerspulenebenen symmetrisch zur Magnetebene angeordnet sind.

4. Passives Magnetlager nach einem der vorhergehenden Ansprüche, **dadurch gekennzeichnet, dass** entlang des Pfades (P) aufeinanderfolgende Magnete (1, 2) eine im Wesentlichen parallele, jedoch bezüglich des Vorzeichens entgegengesetzte Polarisierung haben.

5. Passives Magnetlager nach einem der vorhergehenden Ansprüche, **dadurch gekennzeichnet, dass** die Magnete gleichabständig entlang jedes Pfades (P) verteilt sind und/oder dass alle Lagerspulen (L_{A}, L_{B}) gleichabständig auf zur Ebene des Pfades (P) parallelen Kreisen verteilt sind.

6. Passives Magnetlager nach Anspruch 5 **dadurch gekennzeichnet, dass** der Abstand zwischen den Mittelpunkten zweier benachbarter Lagerspulen (L_{A}, L_{B}) gleich ist wie der Abstand zwischen den Mittelpunkten zweier benachbarter Magnete (1, 2).

7. Passives Magnetlager nach einem der vorhergehenden Ansprüche, **dadurch gekennzeichnet, dass** es Paare von jeweils einer ersten und einer zweiten Lagerspule (L_{A}, L_{B}) aufweist, wobei die Polarisierungsachsen der ersten und der zweiten Lagerspule (L_{A}, L_{B}) jeweils auf derselben Gerade liegen und insbesondere die erste und die zweite Lagerspule (L_{A}, L_{B}) in demselben von weiteren Lagerspulen (L_{A}, L_{B}) getrennten Stromkreis zusammengeschaltet sind.

8. Passives Magnetlager nach einem der vorhergehenden Ansprüche, **dadurch gekennzeichnet, dass** alle Lagerspulen (L_{A}, L_{B}) in einem einzigen Stromkreis (3) seriell hintereinander geschaltet sind, wobei die Lagerspulen (L_{A}, L_{B}) insbesondere so hintereinander geschaltet und ausgerichtet sind, dass auf derselben Seite des Pfades (P) benachbart angeordnete Lagerspulen (L_{A}, L_{B}) bei einem Stromfluss eine im Wesentliche parallele, jedoch bezüglich des Vorzeichens entgegengesetzte magnetische Polarisierung haben.

9. Passives Magnetlager nach einem der vorhergehenden Ansprüche, **dadurch gekennzeichnet, dass** es doppelt so viele Lagerspulen (L_{A}, L_{B}) wie Magnete (1, 2) aufweist und/oder dass jedem Pfad (P) dieselbe Zahl Magnete (1, 2) zugeordnet ist und diese insbesondere zwischen zehn und dreissig liegt.

10. Passives Magnetlager nach einem der vorhergehenden Ansprüche, **dadurch gekennzeichnet, dass** die Magnete (1, 2) beweglich sind und die Lagerspulen (L_{A}, L_{B}) statisch sind, oder dass die Magnete (1, 2) statisch sind und die Lagerspulen (L_{A}, L_{B}) beweglich sind.

11. Passives Magnetlager nach einem der vorhergehenden Ansprüche, **dadurch gekennzeichnet, dass** genau ein Pfad (P) vorgesehen ist und insbesondere das Magnetlager zwei Lagerspulenträger (5) und einen dazwischen angeordneten Magnetträger (4) aufweist.

12. Passives Magnetlager nach einem der Ansprüche 1 bis 10, **dadurch gekennzeichnet, dass** mindestens zwei Pfade (P) vorgesehen sind, wobei die Pfade (P) entlang koaxialer Kreise verlaufen und insbesondere die Pfade (P) in derselben Ebene liegen oder die Pfade (P) entlang von Kreisen mit gleichem Durchmesser verlaufen.

13. Passives Magnetlager nach Anspruch 12, **dadurch gekennzeichnet, dass** es mindestens zwei Magnetträger (4) und mindestens drei Lagerspulenträger (5) aufweist, wobei jeder der Magnetträger (4) insbesondere jeweils zwischen zwei Lagerspulenträgern (5) angeordnet ist.

14. Passives Magnetlager nach einem der vorhergehenden Ansprüche, **dadurch gekennzeichnet, dass** es Abschirmmittel, insbesondere Weicheisenringe (7), aufweist, welche insbesondere so angeordnet sind, dass die nicht auf einen Pfad (P) gerichteten Enden der Lagerspulen (L_{A}, L_{B}) davon abgedeckt sind.

15. Passives Magnetlager nach einem der vorhergehenden Ansprüche, **dadurch gekennzeichnet, dass** die Magnete (1, 2) jeweils zweiteilig, d.h. bestehend aus zwei Teilen, ausgestaltet sind, wobei sich die beiden Teile gegenseitig anziehen, und ein Magnetträger (4) insbesondere Vertiefungen auf zwei einander gegenüberliegenden Seiten zur Aufnahme der Teile der Magnete (1, 2) aufweist.

16. Passives Magnetlager nach einem der vorhergehenden Ansprüche, **dadurch gekennzeichnet, dass** die Leiter aller Lagerspulen (L_{A}, L_{B}) aus einem Material mit endlicher Leitfähigkeit sind und insbesondere alle Lagerspulen (L_{A}, L_{B}) dieselbe Wicklungszahl und/oder dieselbe Induktivität und/oder denselben Widerstand haben.

17. Passives Magnetlager nach einem der vorhergehenden Ansprüche, **dadurch gekennzeichnet, dass** in mindestens einem Stromkreis (3) eine zusätzliche Induktivität zwischengeschaltet ist, welche insbesondere so dimensioniert ist, dass im Stromkreis (3) bei einer vorgesehenen maximalen Drehfrequenz des Lagers die Phasenverschiebung zwischen der Spannung über einer Lagerspule (L_{A}, L_{B}) und dem Strom (I_{L}) im Wesentlichen 90° ist.

18. Magnetlager mit Antrieb, **dadurch gekennzeichnet, dass** es aus einem passiven Magnetlager gemäss einem der vorhergehenden Ansprüche und einem insbesondere darin integrierten Antrieb besteht, wobei die Magnete (1, 2) sowohl zu einer Lagerung als auch zu einem Antrieb eines Rotors (15) dienen.

19. Magnetlager mit Antrieb gemäss Anspruch 18, **dadurch gekennzeichnet, dass** das Lager Antriebsspulen (L_{X}, L_{Y}) aufweist, welche seitlich des Pfades (P) in den von den Magneten (1, 2) erzeugten Magnetfeldern angeordnet sind.

20. Magnetlager mit Antrieb gemäss Anspruch 19, **dadurch gekennzeichnet, dass** die Antriebsspulen (L_{X}, L_{Y}) vom Pfad (P) aus gesehen hinter den Lagerspulen (L_{A}, L_{B}) angeordnet sind, insbesondere hinter den Lagerspulen (L_{A}, L_{B}) direkt im Anschluss an dieselben.

21. Magnetlager mit Antrieb gemäss einem der Ansprüche 19 oder 20, **dadurch gekennzeichnet, dass** die Antriebsspulen (L_{X}, L_{Y}) auf einer ersten Seite des Pfades (P) und insbesondere auf einer zweiten, der ersten Seite gegenüberliegenden zweiten Seite des Pfades (P) angeordnet sind.

22. Magnetlager mit Antrieb gemäss einem der Ansprüche 19 bis 21, **dadurch gekennzeichnet, dass** die Antriebsspulen (L_{X}, L_{Y}) paarweise angeordnet sind, wobei jeweils als Paar angeordnete Antriebsspulen (L_{X}, L_{Y}) Polarisierungachsen haben, welche auf derselben Gerade liegen.

23. Magnetlager mit Antrieb gemäss einem der Ansprüche 19 bis 22, **dadurch gekennzeichnet, dass** es ein Achsiallager ist, wobei die Antriebsspulen (L_{X}, L_{Y}) Polarisierungachsen haben, welche im Wesentlichen achsial gerichtet sind und/oder die Antriebsspulen (L_{X}, L_{Y}) in ein oder zwei Antriebsspulenebenen angeordnet sind und insbesondere auf ein oder gegebenenfalls zwei mit einer Achse des Lagers koaxialen Kreisen gleichabständig verteilt sind.

24. Magnetlager mit Antrieb gemäss einem der Ansprüche 19 bis 23, **dadurch gekennzeichnet, dass** die Antriebsspulen (L_{X}, L_{Y}) an eine Stromquelle, insbesondere einen Strompulsgenerator (13), angeschlossen sind.

25. Magnetlager mit Antrieb gemäss Anspruch 24, **dadurch gekennzeichnet, dass** die Stromquelle in Abhängigkeit von einer Position und/oder Bewegung des Rotors (15) gesteuert wird, wobei insbesondere zur Ermittlung dieser Position und/oder Bewegung ein optischer Sensor (12) und Markierungen (16) auf dem Rotor (15) vorgesehen sind.

26. Magnetlager mit Antrieb gemäss einem der Ansprüche 19 bis 25, **dadurch gekennzeichnet, dass** die Antriebsspulen (L_{X}, L_{Y}) derart geschaltet und relativ zu den Lagerspulen (L_{A}, L_{B}) derart angeordnet sind, dass sich ein von den einzelnen Antriebsspulen (L_{X}, L_{Y}) bewirkter magnetische Fluss durch die Lagerspulen (L_{A}, L_{B}) überlagert und im Wesentlichen aufhebt, wozu insbesondere die Lagerspulen (L_{A}, L_{B}) und die Antriebsspulen (L_{X}, L_{Y}) um einen Phasenwinkel von 90° versetzt zueinander angeordnet sind.

27. Magnetlager mit Antrieb gemäss einem der Ansprüche 19 bis 26, **dadurch gekennzeichnet, dass** die Antriebsspulen (L_{X}, L_{Y}) derart in einem gemeinsamen Stromkreis geschaltet sind, dass auf derselben Seite des Pfades (P) benachbart angeordnete Antriebsspulen (L_{X1}, L_{X2}) bei einem Stromfluss eine im Wesentlichen parallele, jedoch bezüglich des Vorzeichens entgegengesetzte magnetische Polarisierung haben und gegebenenfalls Antriebsspulen (L_{X1}, L_{Y1}) auf unterschiedlichen Seiten des Pfades (P), deren Polarisierungsachsen auf derselben Gerade liegen, eine gleichgerichtete magnetische Polarisierung haben.

## Claims

1. Passive magnetic bearing, comprising magnets (1, 2) and bearing coils (L_{A}, L_{B}), wherein the magnetic bearing is an axial bearing, wherein the magnets (1, 2) are moveable relatively to the bearing coils (L_{A}, L_{B}) along at least one circular path (P) and the magnets (1, 2) as well as the bearing coils (L_{A}, L_{B}) are, in respect to their axes of polarization, aligned axially, wherein the bearing coils (L_{A}, L_{B}) are exposed to an oscillating magnetic flux due to the magnetic fields generated by the magnets (1, 2), **characterized in that** the bearing coils (L_{A}, L_{B}) are arranged on a first side of the path (P) and a second side opposite to the first side of the path (P), that the bearing coils (L_{A}, L_{B}) are connected to each other in one or several electric circuits (3) such that in each electric circuit (3) at least one bearing coil (L_{A}) of the first side of the path (P) and at least one bearing coil (L_{B}) of the second side of the path (P) are interconnected, wherein for each circuit (3) it applies that, when the magnets (1, 2) are moved along the path (P), the voltages (U_{L}) induced by the oscillating magnetic flux in the bearing coils (L_{A}, L_{B}) substantially cancel each other at any time and thereby no current (I_{L}) flows and, when there is a deviation (Δx) of the magnets (1, 2) from the path (P) in direction of the polarization axis of the magnets (1, 2), the voltages (U_{L}) induced in the bearing coils (L_{A}, L_{B}) do not cancel each other due to the changed distances from the magnets (1, 2) and the thereby changed strength of the magnetic flux such that a current (I_{L}) flows and the bearing coils (L_{A}, L_{B}), which the current (I_{L}) flows through, exert a restoring force (F) on the magnets (1, 2).

2. Passive magnetic bearing according to claim 1, **characterized in that** the bearing coils (L_{A}, L_{B}) and the magnets (1, 2) have the same distance (r) from the rotation axis.

3. Passive magnetic bearing according to one of the claims 1 or 2, **characterized in that** the magnets (1, 2) are arranged in a magnet plane or symmetrically to a magnet plane and a plurality of bearing coils (L_{A}, L_{B}) are arranged on both sides of the magnet plane in two bearing coil planes, wherein the bearing coil planes are arranged symmetrically to the magnet plane.

4. Passive magnetic bearing according to one of the preceding claims, **characterized in that** magnets (1, 2), which are consecutive along the path (P), have a substantially parallel, however, regarding the sign opposing polarization.

5. Passive magnetic bearing according to one of the preceding claims, **characterized in that** the magnets are distributed at equal distances along each path (P) and/or that all bearing coils (L_{A}, L_{B}) are distributed at equal distances on circles parallel to the plane of the path (P).

6. Passive magnetic bearing according to claim 5, **characterized in that** the distance between the center points of two neighboring bearing coils (L_{A}, L_{B}) is equal to the distance between the center points of two neighboring magnets (1, 2).

7. Passive magnetic bearing according to one of the preceding claims, **characterized in that** it comprises pairs each with a first and a second bearing coil (L_{A}, L_{B}), wherein, in each case, the polarization axes of the first and the second bearing coil (L_{A}, L_{B}) lie on the same straight line and in particular the first and the second bearing coil (L_{A}, L_{B}) are connected to each other in the same electric circuit separate from further bearing coils (L_{A}, L_{B}).

8. Passive magnetic bearing according to one of the preceding claims, **characterized in that** all bearing coils (L_{A}, L_{B}) are series connected in a single electric circuit (3), wherein the bearing coils (L_{A}, L_{B}) are in particular series connected and oriented in such a way that neighboring bearing coils (L_{A}, L_{B}) on the same side of the path (P) have, when there is a current flow, a substantially parallel, but regarding the sign opposing magnetic polarization.

9. Passive magnetic bearing according to one of the preceding claims, **characterized in that** it comprises twice as many bearing coils (L_{A}, L_{B}) than magnets (1, 2) and/or that to each path (P) the same number of magnets (1, 2) is assigned and this number is in particular between ten and thirty.

10. Passive magnetic bearing according to one of the preceding claims, **characterized in that** the magnets (1, 2) are moveable and the bearing coils (L_{A}, L_{B}) are static, or that the magnets (1, 2) are static and the bearing coils (L_{A}, L_{B}) are moveable.

11. Passive magnetic bearing according to one of the preceding claims, **characterized in that** exactly one path (P) is provided and in particular the magnet bearing comprises two bearing coil holders (5) and a magnet holder (4) arranged in between.

12. Passive magnetic bearing according to one of the claims 1 to 10, **characterized in that** at least two paths (P) are provided, wherein the paths (P) run along coaxial circles and in particular the paths (P) lie in the same plane or the paths (P) run along circles with equal diameter.

13. Passive magnetic bearing according to claim 12, **characterized in that** it comprises at least two magnet holders (4) and at least three bearing coil holders (5), wherein each of the magnet holders (4) is arranged in particular between two bearing coil holders (5).

14. Passive magnetic bearing according to one of the preceding claims, **characterized in that** it comprises means for shielding, in particular soft iron rings (7), which are particularly arranged such that the ends of the bearing coils (L_{A}, L_{B}), which are not directed towards a path (P), are covered by it.

15. Passive magnetic bearing according to one of the preceding claims, **characterized in that** the magnets (1, 2), in each case, are designed as two parts, i.e. consisting of two parts, wherein the two parts attract each other and a magnet holder (4) in particular comprises recesses on two sides opposing each other for receiving the parts of the magnets (1, 2).

16. Passive magnetic bearing according to one of the preceding claims, **characterized in that** the conductors of all bearing coils (L_{A}, L_{B}) are of a material with finite conductivity and in particular all bearing coils (L_{A}, L_{B}) have the same number of windings and/or the same inductance and/or the same resistance.

17. Passive magnetic bearing according to one of the preceding claims, **characterized in that** in at least one electric circuit (3) an additional inductance is connected by insertion, which is in particular dimensioned such that in the electric circuit (3) at a designated maximum rotation frequency of the bearing the phase shift between the voltage across a bearing coil (L_{A}, L_{B}) and the current (I_{L}) is substantially 90°.

18. Magnetic bearing with drive, **characterized in that** it consists of a passive magnetic bearing according to one of the preceding claims and a drive, in particular integrated in it, wherein the magnets (1, 2) serve for both, a bearing as well as a driving of the rotor (15).

19. Magnetic bearing with drive according to claim 18, **characterized in that** the bearing comprises drive coils (L_{X}, L_{Y}), which are arranged sideways of path (P) in the magnetic fields generated by the magnets (1, 2).

20. Magnetic bearing with drive according to claim 19, **characterized in that** the drive coils (L_{X}, L_{Y}) are, when viewed from path (P), arranged behind the bearing coils (L_{A}, L_{B}), in particular behind the bearing coils (L_{A}, L_{B}) directly adjacent to them.

21. Magnetic bearing with drive according to one of the claims 19 or 20, **characterized in that** the drive coils (L_{X}, L_{Y}) are arranged on a first side of the path (P) and in particular on a second side of the path (P) opposite to the first side.

22. Magnetic bearing with drive according to one of the claims 19 to 21, **characterized in that** the drive coils (L_{X}, L_{Y}) are arranged as pairs, wherein in each case drive coils (L_{X}, L_{Y}) arranged as a pair have polarization axes which lie on the same straight line.

23. Magnetic bearing with drive according to one of the claims 19 to 22, **characterized in that** it is an axial bearing, wherein the drive coils (L_{X}, L_{Y}) have polarization axes, which are substantially oriented axially and/or the drive coils (L_{X}, L_{Y}) are arranged in one or two drive coil planes and in particular are distributed at equal distances on one or, as the case may be, two circles, which are coaxial with an axis of the bearing.

24. Magnetic bearing with drive according to one of the claims 19 to 23, **characterized in that** the drive coils (L_{X}, L_{Y}) are connected to a power source, in particular a current pulse generator (13).

25. Magnetic bearing with drive according to claim 24, **characterized in that** the power source is controlled depending on a position and/or movement of the rotor (15), wherein in particular for determining said position and/or movement an optical sensor (12) and markings (16) are provided on the rotor (15).

26. Magnetic bearing with drive according to one of the claims 19 to 25, **characterized in that** the drive coils (L_{X}, L_{Y}) are connected such and arranged relatively to the bearing coils (L_{A}, L_{B}) such that a magnetic flux generated by the individual drive coils (L_{X}, L_{Y}) through the bearing coils (L_{A}, L_{B}) superposes and substantially cancels itself, for which in particular the bearing coils (L_{A}, L_{B}) and the drive coils (Lx, L_{Y}) are arranged shifted relatively to each other by a phase angel of 90°.

27. Magnetic bearing with drive according to one of the claims 19 to 26, **characterized in that** the drive coils (L_{X}, L_{Y}) are connected in a common electric circuit such that neighboring drive coils (L_{X1}, L_{X2}) arranged on the same side of the path (P) have, when there is a current flow, a substantially parallel, but regarding the sign opposing magnetic polarization and, as the case may be, drive coils (L_{X1}, L_{Y1}) on different sides of the path (P), the polarization axes of which lie on the same straight line, have an equally oriented magnetic polarization.

## Revendications

1. Palier magnétique passif comprenant des aimants (1, 2) et des bobines de palier (L_{A}, L_{B}), le palier magnétique étant un palier magnétique axial, les aimants (1, 2) étant mobiles par rapport aux bobines (L_{A}, L_{B}) le long d'au moins une trajectoire circulaire (P) et les aimants (1, 2) comme les bobines (L_{A}, L_{B}) étant orientés axialement par rapport à leurs axes de polarisation, et les bobines (L_{A}, L_{B}), en raison des champs magnétiques produits par les aimants (1, 2), étant soumises à un flux magnétique oscillant,
**caractérisé en ce que** les bobines de palier (L_{A}, L_{B}) sont disposées sur un premier côté de la trajectoire (P) et sur un second côté de la trajectoire (P) opposé au premier, et **en ce qu'**elles sont interconnectées dans un ou plusieurs circuits (3) de sorte que dans chaque circuit (3) au moins une bobine (L_{A}) du premier côté de la trajectoire (P) et au moins une bobine (L_{B}) du second côté de la trajectoire (P) soient intercalées, étant précisé que pour chaque circuit (3), lors d'un déplacement des aimants (1, 2) le long de la trajectoire (P) les tensions (U_{L}) induites dans les bobines (L_{A}, L_{B}) par le flux magnétique oscillant se neutralisent globalement, à tout moment, et de ce fait aucun courant (I_{L}) ne passe, et en cas d'écart (Δx) des aimants (1, 2) par rapport à la trajectoire (P) dans le sens de l'axe de polarisation des aimants (1, 2), les tensions (U_{L}) induites dans les bobines de palier (L_{A}, L_{B}) ne se neutralisent pas, en raison de la variation des éloignements des aimants (1, 2) et de l'intensité ainsi modifiée du flux magnétique, de telle sorte qu'un courant (I_{L}) passe et que les bobines (L_{A}, L_{B}) traversées par le courant (I_{L}) exercent une force de rappel (F) sur les aimants (1, 2).

2. Palier magnétique passif selon la revendication 1, **caractérisé en ce que** les bobines de palier (L_{A}, L_{B}) et les aimants (1, 2) ont le même écartement (r) par rapport à l'axe de rotation.

3. Palier magnétique passif selon la revendication 1 ou 2, **caractérisé en ce que** les aimants (1, 2) sont disposés dans un plan d'aimants ou symétriquement par rapport à un plan d'aimants, et plusieurs bobines de palier (L_{A}, L_{B}) sont disposées des deux côtés de ce plan, sur deux plans de bobines de palier, les plans de bobines de palier étant symétriques par rapport au plan d'aimants.

4. Palier magnétique passif selon l'une des revendications précédentes, **caractérisé en ce que** des aimants (1, 2) qui se suivent le long de la trajectoire (P) ont une polarisation globalement parallèle, mais de signe opposé.

5. Palier magnétique passif selon l'une des revendications précédentes, **caractérisé en ce que** les aimants sont répartis à égale distance le long de chaque trajectoire (P) et/ou **en ce que** toutes les bobines de palier (L_{A}, L_{B}) sont réparties à égale distance sur des cercles parallèles au plan de la trajectoire (P).

6. Palier magnétique passif selon la revendication 5, **caractérisé en ce que** l'écartement entre les centres de deux bobines (L_{A}, L_{B}) voisines est égal à l'écartement entre les centres de deux aimants (1, 2) voisins.

7. Palier magnétique passif selon l'une des revendications précédentes, **caractérisé en ce qu'**il comporte des paires formées chacune par une première et une seconde bobine de palier (L_{A}, L_{B}), les axes de polarisation des première et seconde bobines de palier (L_{A}, L_{B}) étant situés sur la même droite et lesdites première et seconde bobines (L_{A}, L_{B}), notamment, étant interconnectées dans le même circuit, séparé d'autres bobines (L_{A}, L_{B}).

8. Palier magnétique passif selon l'une des revendications précédentes, **caractérisé en ce que** toutes les bobines de palier (L_{A}, L_{B}) sont montées en série les unes derrière les autres dans un seul circuit (3), les bobines (L_{A}, L_{B}) étant notamment montées les unes derrière les autres et orientées de sorte que les bobines (L_{A}, L_{B}) voisines, sur le même côté de la trajectoire (P), aient lors d'un passage de courant une polarisation magnétique globalement parallèle, mais de signe opposé.

9. Palier magnétique passif selon l'une des revendications précédentes, **caractérisé en ce qu'**il comprend deux fois plus de bobines de palier (L_{A}, L_{B}) que d'aimants (1, 2) et/ou **en ce que** le même nombre d'aimants (1, 2) est associé à chaque trajectoire (P) et ce nombre est situé en particulier entre dix et trente.

10. Palier magnétique passif selon l'une des revendications précédentes, **caractérisé en ce que** les aimants (1, 2) sont mobiles et les bobines de palier (L_{A}, L_{B}) statiques, ou **en ce que** les aimants (1, 2) sont statiques et les bobines (L_{A}, L_{B}) mobiles.

11. Palier magnétique passif selon l'une des revendications précédentes, **caractérisé en ce qu'**il est prévu exactement une trajectoire (P) et notamment le palier magnétique comprend deux supports de bobines de palier (5) et un support d'aimants (4) disposé entre ceux-ci.

12. Palier magnétique passif selon l'une des revendications 1 à 10, **caractérisé en ce qu'**il est prévu au moins deux trajectoires (P), les trajectoires (P) s'étendant le long de cercles coaxiaux et les trajectoires (P) étant situées en particulier dans le même plan ou les trajectoires (P) s'étendant le long de cercles de même diamètre.

13. Palier magnétique passif selon la revendication 12, **caractérisé en ce qu'**il comprend au moins deux supports d'aimants (4) et au moins trois supports de bobines de palier (5), chacun des supports d'aimants (4) étant disposé en particulier entre deux supports de bobines (5).

14. Palier magnétique passif selon l'une des revendications précédentes, **caractérisé en ce qu'**il comprend des moyens de protection, en particulier des anneaux en fer doux (7), qui sont disposés en particulier de sorte que les extrémités des bobines (L_{A}, L_{B}) qui ne sont pas dirigées vers une trajectoire (P) soient couvertes par ces anneaux.

15. Palier magnétique passif selon l'une des revendications précédentes, **caractérisé en ce que** les aimants (1, 2) sont en deux parties, c'est-à-dire qu'ils se composent de deux éléments, ces deux éléments s'attirant mutuellement, et un support d'aimants (4) présente en particulier des creux, sur deux côtés opposés, pour recevoir les éléments des aimants (1, 2).

16. Palier magnétique passif selon l'une des revendications précédentes, **caractérisé en ce que** les conducteurs de toutes les bobines de palier (L_{A}, L_{B}) se composent d'une matière à conductibilité finie et toutes les bobines (L_{A}, L_{B}), notamment, ont le même nombre de spires et/ou la même inductance et/ou la même résistance.

17. Palier magnétique passif selon l'une des revendications précédentes, **caractérisé en ce qu'**il est prévu, intercalée dans au moins un circuit (3), une inductance supplémentaire qui est dimensionnée notamment pour que dans le circuit (3), en présence d'une fréquence de rotation maximale prévue du palier, le déphasage entre la tension sur une bobine (L_{A}, L_{B}) et le courant (I_{L}) soit globalement de 90°.

18. Palier magnétique à entraînement, **caractérisé en ce qu'**il se compose d'un palier magnétique passif selon l'une des revendications précédentes et d'un entraînement intégré notamment dans celui-ci, les aimants (1, 2) servant aussi bien au montage qu'à l'entraînement d'un rotor (15).

19. Palier magnétique à entraînement selon la revendication 18, **caractérisé en ce que** le palier comporte des bobines d'entraînement (L_{X}, L_{Y}) qui sont disposées sur les côtés de la trajectoire (P) dans les champs magnétiques produits par les aimants (1, 2).

20. Palier magnétique à entraînement selon la revendication 19, **caractérisé en ce que** les bobines d'entraînement (L_{X}, L_{Y}) sont disposées derrière les bobines de palier (L_{A}, L_{B}), à partir de la trajectoire (P), en particulier derrière les bobines de palier (L_{A}, L_{B}) et directement à la suite de celles-ci.

21. Palier magnétique à entraînement selon la revendication 19 ou 20, **caractérisé en ce que** les bobines d'entraînement (L_{X}, L_{Y}) sont disposées sur un premier côté de la trajectoire (P) et en particulier sur un second côté de la trajectoire (P) opposé au premier.

22. Palier magnétique à entraînement selon l'une des revendications 19 à 21, **caractérisé en ce que** les bobines d'entraînement (L_{X}, L_{Y}) sont disposées par paires, les bobines d'entraînement (L_{X}, L_{Y}) de chaque paire ayant des axes de polarisation qui sont situés sur la même droite.

23. Palier magnétique à entraînement selon l'une des revendications 19 à 22, **caractérisé en ce qu'**il est constitué par un palier axial, les bobines d'entraînement (L_{X}, L_{Y}) ayant des axes de polarisation qui sont orientés globalement axialement et/ou les bobines d'entraînement (L_{X}, L_{Y}) sont disposées dans un ou deux plans de bobines d'entraînement et sont réparties à égale distance notamment sur un ou éventuellement deux cercles coaxiaux par rapport à un axe du palier.

24. Palier magnétique à entraînement selon l'une des revendications 19 à 23, **caractérisé en ce que** les bobines d'entraînement (L_{X}, L_{Y}) sont raccordées à une source de courant, en particulier à un générateur d'impulsions de courant (13).

25. Palier magnétique à entraînement selon la revendication 24, **caractérisé en ce que** la source de courant est commandée en fonction d'une position et/ou d'un déplacement du rotor (15), un capteur optique (12) et des marquages (16) étant prévus sur le rotor (15) notamment pour déterminer cette position et/ou ce déplacement.

26. Palier magnétique à entraînement selon l'une des revendications 19 à 25, **caractérisé en ce que** les bobines d'entraînement (L_{X}, L_{Y}) sont montées et sont disposées par rapport aux bobines de palier (L_{A}, L_{B}) pour que des flux magnétiques provoqués à travers les bobines de palier (L_{A}, L_{B}) par les bobines d'entraînement individuelles (L_{X}, L_{Y}) se superposent et se neutralisent globalement, les bobines de palier (L_{A}, L_{B}) et les bobines d'entraînement (L_{X}, L_{Y}), notamment, étant pour cela déphasées suivant un angle de phase de 90°.

27. Palier magnétique à entraînement selon l'une des revendications 19 à 26, **caractérisé en ce que** les bobines d'entraînement (L_{X}, L_{Y}) sont montées dans un circuit commun de sorte que les bobines d'entraînement (L_{X1}, L_{X2}) voisines disposées sur le même côté de la trajectoire (P) aient en présence d'un flux de courant une polarisation magnétique globalement parallèle mais de signe opposé, et qu'éventuellement des bobines d'entraînement (L_{X1}, L_{Y2}) disposées sur des côtés différents de la trajectoire (P) et dont les axes de polarisation sont situés sur la même droite aient une polarisation magnétique de même sens.
